# EUROPÄISCHE PATENTSCHRIFT

(11) **EP 1 781 499 B1**
(45) Veröffentlichungstag und Bekanntmachung des Hinweises auf die Patenterteilung: **12.10.2011**
(21) Anmeldenummer: 05774321.3
(22) Anmeldetag: 12.08.2005
(51) Int. Cl.: B60R 16/02, B60T 8/44

(54) **NUTZFAHRZEUG MIT MEHREREN JEWEILS VON MINDESTENS EINEM ELEKTRONISCHEN STEUERGERÄT GESTEUERTEN ELEKTRISCHEN EINRICHTUNGEN**
UTILITY VEHICLE COMPRISING SEVERAL ELECTRIC DEVICES WHICH ARE CONTROLLED BY AT LEAST ONE ELECTRONIC CONTROL DEVICE
VEHICULE UTILITAIRE COMPRENANT PLUSIEURS DISPOSITIFS ELECTRIQUES COMMANDES RESPECTIVEMENT PAR AU MOINS UN APPAREIL ELECTRONIQUE

(30) Priorität: 18.08.2004 DE 102004039998
(43) Veröffentlichungstag der Anmeldung: 09.05.2007
(73) Patentinhaber: KNORR-BREMSE Systeme für Nutzfahrzeuge GmbH, 80809 München (DE)
(72) Erfinder: HERGES, Michael, 80935 München (DE)
(74) Vertreter: Schönmann, Kurt
(86) Internationale Anmeldenummer: PCT/EP2005/008782
(87) Internationale Veröffentlichungsnummer: WO 2006/018241

(56) Entgegenhaltungen:
- EP-A- 1 584 532
- US-A- 6 157 887

## Beschreibung

### Stand der Technik

Die Erfindung geht aus von einem Nutzfahrzeug mit mehreren, von mindestens einem elektronischen Steuergerät gesteuerten elektrischen Einrichtungen gemäß dem Oberbegriff von Anspruch 1. Ein gattungsbildendes Nutzfahrzeug ist in der nachveröffentlichten EP 1 584 532 A1 beschrieben.

Heutige Nutzfahrzeuge beinhalten immer mehr elektrische oder elektronische Systeme wie zum Beispiel eine elektrische Bremsanlage, eine elektrische Lenkung, eine elektrische Motorsteuerung, eine elektrische Luftfederung, eine elektrische Dämpfung, eine elektrische Luftaufbereitung etc., die jeweils von einem elektronischen Steuergerät gesteuert sind, wodurch eine rel. hohe Anzahl von Steuergeräten vorhanden ist. Gleichzeitig werden diese einzelnen Systeme immer intelligenter und benötigen immer mehr Daten der anderen, im Nutzfahrzeug enthaltenen Systeme, was zu vernetzten Strukturen führt. Beispielsweise müssen die Funktionen der Antriebsschlupfregelung (ASR) und des Elektronischen Stabilitätsprogramms (ESP) zumindest auf die Brems- und Motorsteuerung zugreifen können.

Einige dieser Systeme sind sicherheitskritisch (z.B. Bremse, Lenkung), was besondere Ansprüche an die entsprechenden Steuergeräte stellt, beispielsweise in Form von fail-safe- oder von fail-silent-Verhalten oder in Form von Redundanzen. So sind beispielsweise aus der EP 1 032 518 B1 redundante Steuergeräte und ein redundanter Datenbus einer elektromechanischen Fahrzeugbremsanlage zur Erhöhung der Funktionssicherheit bekannt. Falls solche Redundanzen aus Sicherheitsgründen notwendig sind, werden meist ein Steuergerät in der Kabine und eines am Rahmen des Nutzfahrzeugs vorgesehen. Ebenso sind die weiteren elektronischen Baugruppen wie Aktoren oder Sensoren räumlich getrennt voneinander am Nutzfahrzeug angeordnet, beispielsweise werden über eine in der Kabine angeordnete Eingabeeinheit eingegebene Daten an am Rahmen angeordnete Steuergeräte geleitet. Die steigende Anzahl elektrischer und elektronischer Baugruppen in Nutzfahrzeugen bedingt jedoch einen großen Verkabelungsaufwand und eine hohe Anzahl von Steckverbindungen, was die Fehleranfälligkeit erhöht.

Der vorliegenden Erfindung liegt die Aufgabe zugrunde, ein Nutzfahrzeug mit einer Baueinheit der eingangs erwähnten Art derart weiter zu bilden, dass die Baueinheit auf einfache und kostengünstige Weise mit weiteren Bauelementen und Baugruppen elektrisch verbunden werden kann.

### Offenbarung der Erfindung

Ausgangspunkt der Erfindung ist, dass eine bei Nutzfahrzeugen ohnehin vorhandene Pedaleinheit mit mindestens einem der Steuergeräte der elektrischen Einrichtungen zu einem Modul zusammengefasst wird. Zum einen verkürzen sich hierdurch die Leitungslängen zwischen den Sensoren tragenden Pedalen und den zugeordneten Steuergeräten, beispielsweise zwischen einem Potentiometer als Wegaufnehmer des Gaspedalswegs oder einem pedalnah an der Lenksäule angeordneten Lenkwinkelsenor und dem jeweiligen Signaleingang des Steuergeräts. Zum ändern, kann dann die aus Steuergeräten und Pedaleinheit bestehende, Modul als Übergabepunkt der Verkabelung zwischen der in der Regel schwenkbaren Kabine und dem Rahmen dienen, da die Aktoren und Sensoren meist am Rahmen und die Bedienelemente, Anzeige- und Eingabeeinrichtungen meist in der Kabine angeordnet sind. Darüber hinaus kann das Modul vorgefertigt werden; was die Fertigungskosten reduziert.

Die Zusammenfassung erfolgt dabei durch eine räumlich nahe Anordnung der Pedaleinheit und dem mindestens einem Steuergerät zu einer baulichen Einheit. Diese kann beispielsweise durch
a) Aneinanderflanschen eines Pedalträgers und eines Gehäuses des mindestens einen Steuergeräts,
b) Einschieben des mindestens einen Steuergerätes in ein Fach innerhalb des Pedalträgers mit lösbarer Verriegelung,
c) Integration von Elementen der Pedaleinheit und dem mindestens einen Steuergerät in einem einzigen Gehäuse, oder durch
d) Integration von Elementen der Pedaleinheit und dem mindestens einen Steuergerät in einem einzigen Gehäuse und Anflanschen oder Lagern der restlichen Komponenten der Pedaleinheit am gemeinsamen Gehäuse erzeugt werden.

Erfindungsgemäß ist das Modul aus dem mindestens einen Steuergerät und der Pedaleinheit an einem Kabinenboden der am Rahmen des Nutzfahrzeugs gelagerten Kabine angeordnet und weist wenigstens eine Steckerleiste zur Zuführung von Kabeln Sensoren und/oder Aktoren aus dem Bereich des Rahmens auf, wobei die Steckerleiste an der von der Kabine weg weisenden Seite des Kabinenbodens angeordnet ist.

Bevorzugt weist das Modul aus dem mindestens einen Steuergerät und der Pedaleinheit wenigstens eine weitere Steckerleiste zur Zuführung von Kabeln von Sensoren, Aktoren oder Eingabe- und Anzeigegeräten in der Kabine auf.

Da nun das mindestens eine elektronische Steuergerät selbst an der Schnittstelle zur Kabine angeordnet ist, können alle sowohl von der Kabine, als auch von außerhalb der Kabine kommenden Leitungen direkt mit dem mindestens einen Steuergerät verbunden werden, ohne, wie beim Stand der Technik, zunächst über die Steckverbindungen am Übergabepunkt zur Kabine geführt zu werden, was das Fehlerrisiko von gestörten Steckverbindungen erheblich reduziert.

Weiterhin wird es überflüssig, jeweils mindestens ein Steuergerät in der Kabine und mindestens ein damit datenmäßig verbundenes weiteres Steuergerät außerhalb der Kabine zu platzieren, um die dort jeweils befindlichen Aktoren und Sensoren direkt zu kontaktieren.

Das mindestens eine Steuergerät kann außerdem als Verbindungsstelle (Gateway) für reine Kabinendatenbusse und Datenbusse zu anderen Teilen des Fahrzeugs dienen. Auch hier entfallen die zusätzlichen Steckverbindungen am Übergabepunkt zur Kabine.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur eine schematische Darstellung einer Kabine eines Nutzfahrzeugs.

### Beschreibung des Ausführungsbeispiels

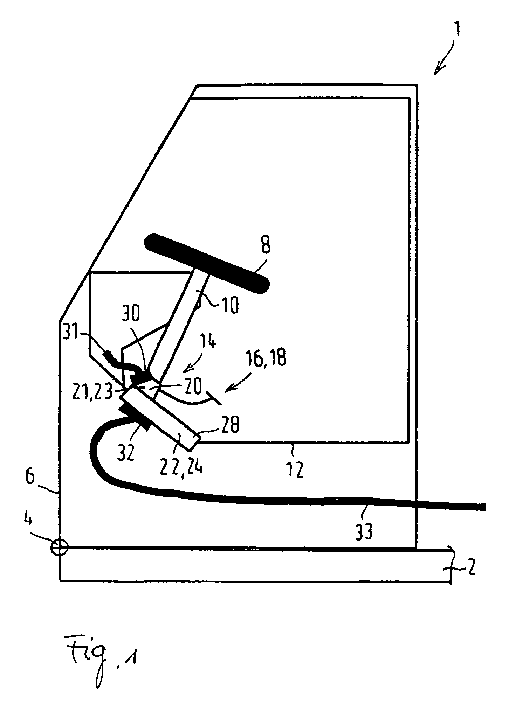

Die in Fig.1 insgesamt mit 1 bezeichnete Kabine eines Nutzfahrzeugs ist bezüglich des Rahmens 2 um eine Schwenkachse 4 im Bereich einer vorderen Spritzwand 6 kippbar gelagert. In der Kabine 1 ist eine ein Lenkrad 8 tragende Lenksäule 10 und eine in unmittelbarer Nachbarschaft zu dieser, an einem Kabinenboden 12 eine Pedaleinheit 14 angeordnet. Die Pedaleinheit 14 umfasst eine Pedalträgerplatte 20, an welcher ein Gaspedal 16 und ein Bremspedal 18 angelenkt sowie beispielsweise die Sensorik 21 zur Pedalwegmessung und fallweise noch andere mit den Pedalen 16, 18 zusammenwirkende Bauelemente angeordnet sind. Falls kein automatisches Getriebe vorhanden ist, kann die Pedaleinheit 14 zusätzlich ein Kupplungspedal umfassen. Weiterhin ist an der Pedalträgerplatte 20, an welcher auch die Lenksäule gelagert ist, auch ein Lenkwinkelsensor 23 angeordnet.

Das Nutzfahrzeug umfasst weiterhin eine Vielzahl elektrischer oder elektronische Systeme wie eine elektrische Bremsanlage, eine elektrische Lenkung, einen elektronische Motorsteuerung, eine elektronische Luftaufbereitung, eine elektrische Luftfederung, eine elektrische Dämpfung, eine elektrische Luftaufbereitung etc., die aber nun gemeinsam von den beiden elektronischen Steuergeräten 22, 24 gesteuert sind.

Dabei können die einzelnen Aktoren und Sensoren mit eigenen Elektroniken, die als Geräte- oder Subsystemtreiber fungieren, ausgelegt sein, wie beispielsweise ein ACC Radarsensor, der die aufbereiteten Daten über im Umfeld erkannte Objekte über einen Datenbus bereitstellt oder ein Druckregelmodul, das auf einen über einen Datenbus übertragenen Befehl hin den Bremsdruck für ein Rad oder eine Achse einregelt und gleichzeitig Informationen über momentanen Bremsdruck, Drehzahl und Belagverschleiß über den Datenbus zurück liefert. Es können aber auch rein elektrische Elemente Verwendung finden, wie beispielsweise die Magnete von ABS-Ventilen oder die Pedalwegsensoren eines Fußbremsmoduls. Ein Aktor oder Sensor kann mit einem einzelnen der beiden Steuergeräten oder aber mit beiden verknüpft sein.

Aus Sicherheitsgründen werden die Bremsanlage und die Lenkung von beiden Steuergeräten 22, 24 angesteuert, welche jeweils fail-silent verschaltet sind, d.h. dass nach einem Ausfall oder Fehler eines der beiden Steuergeräte 22 oder 24 keine Steuerbefehle mehr an die zugeordneten Aktoren gesandt werden und das jeweils andere Steuergerät die Funktion des ausgefallenen Steuergeräts 22 oder 24 übernimmt, beziehungsweise die Funktion des verbliebenen Steuergerätes 22 oder 24 ausreicht, um das Fahrzeug nicht in einen kritischen Zustand geraten zu lassen.

Sind zusätzlich eine ausfallsichere, elektrische Energieversorgung sowie eine ausfallsichere Datenübertragung gewährleistet, kann sowohl die Bremsanlage und als auch die Lenkung jeweils vollelektrisch ausgeführt sein im Sinne von "Brake-by-wire" und "Steer-by-wire", d.h. es existiert beispielsweise bei der Bremsanlage keine pneumatische Steuerung mehr als unterlegte Sicherheitsebene, sondern die Bremsfunktion wird in jedem Fall rein elektrisch gesteuert.

In den beiden Steuergeräten 22, 24 werden dann ebenfalls systemübergreifende Funktionen wie beispielsweise ASR oder ESP sowie Fahrerassistenzfunktionen wie beispielsweise automatisches Einparken oder ACC (adaptive cruise control) ausgeführt, ohne dass dazu nötige Daten erst von vielen, einzelnen System-Steuergeräten über Datenbusse zusammengetragen oder verteilt werden müssen.

Vorzugsweise sind die zwei redundanten Steuergeräte 22, 24 mit der Pedaleinheit 14 zu einer vorfertigbaren Baueinheit oder zu einem Modul 26 zusammengefasst. Dies kann beispielsweise dadurch realisiert sein, dass die Steuergeräte 22, 24 in einem an der Pedalträgerplatte 20 der Pedaleinheit 14 angeflanschten Gehäuse 28 untergebracht oder in einem Fach in der Pedalträgerplatte eingeschoben sind. Denkbar ist auch, dass die Steuergeräte 22, 24 und Bauelemente der Pedaleinheit 14 in einem gemeinsamen Gehäuse untergebracht sind.

Das Modul 26 aus den Steuergeräten 22, 24 und der Pedaleinheit 14 steht zum einen mit Sensoren, Aktoren oder Eingabe- und Anzeigegeräten in der Kabine 1 des Nutzfahrzeugs und zum andern mit im Bereich eines Rahmens 2 des Nutzfahrzeugs angeordneten Sensoren und/oder Aktoren in signal- und/oder leistungsübertragender Verbindung. Hierzu kann das Modul 26 wenigstens eine erste Steckerleiste 30 zur Zuführung von Kabeln 31 von Sensoren und/oder Aktoren aus der Kabine 1 und wenigstens eine zweite Steckerleiste 32 zur Zuführung von Kabeln 33 von Sensoren und/oder Aktoren aus dem Bereich des Rahmens 2 aufweisen, wobei die zweite Steckerleiste 32 vorzugsweise an der von der Kabine 1 weg weisenden Seite des Kabinenbodens 12 angeordnet ist. Durch die Kabel wird vorzugsweise mindestens ein CAN-Datenbus verwirklicht, welcher die Kommunikation zwischen den Sensoren 21, 23, Aktoren und Steuergeräten 22, 24 übernimmt.

### Bezugszeichenliste

- 1: Kabine
- 2: Rahmen
- 4: Schwenkachse
- 6: Spritzwand
- 8: Lenkrad
- 10: Lenksäule
- 12: Kabinenboden
- 14: Pedaleinheit
- 16: Gaspedal
- 18: Bremspedal
- 20: Pedalträgerplatte
- 21: Sensorik
- 22: Steuergeräte
- 23: Lenkwinkelsensor
- 24: Steuergeräte
- 26: Modul
- 28: Gehäuse
- 30: erste Steckerleiste
- 31: Kabel
- 32: zweite Steckerleiste
- 33: Kabel

## Patentansprüche

1. Nutzfahrzeug mit mehreren, von mindestens einem elektronischen Steuergerät (22, 24) gesteuerten elektrischen Einrichtungen sowie mit einer Pedaleinheit (14) umfassend an einem Pedalträger (20) gelagerte Fußpedale (16, 18), wobei das mindestens eine Steuergerät (22, 24) mit der Pedaleinheit (14) zu einem Modul (26) zusammengefasst ist, **dadurch gekennzeichnet, dass** das Modul (26) aus dem mindestens einen Steuergerät (22, 24) und der Pedaleinheit (14) an einem Kabinenboden (12) einer an einem Rahmen (2) des Nutzfahrzeugs gelagerten Kabine (1) angeordnet ist und wenigstens eine Steckerleiste (32) zur Zuführung von Kabeln (33) von Sensoren und/oder Aktoren aus dem Bereich des Rahmens (2) aufweist, wobei die Steckerleiste (32) an der von der Kabine (1) weg weisenden Seite des Kabinenbodens (12) angeordnet ist.

2. Nutzfahrzeug nach Anspruch 1, **dadurch gekennzeichnet, dass** das mindestens eine Steuergerät (22, 24) in einem an den Pedalträger (20) der Pedaleinheit (14) angeflanschten Gehäuse (28) untergebracht ist.

3. Nutzfahrzeug nach Anspruch 1, **dadurch gekennzeichnet, dass** das mindestens eine Steuergerät (22, 24) und Bauelemente der Pedaleinheit (14) in einem gemeinsamen Gehäuse untergebracht sind.

4. Nutzfahrzeug nach wenigstens einem der vorhergehenden Ansprüche, **dadurch gekennzeichnet, dass** wenigstens zwei bezüglich ihrer Funktion zumindest teilweise redundante Steuergeräte (22, 24) mit der Pedaleinheit (14) zu dem Modul (26) zusammengefasst sind.

5. Nutzfahrzeug nach Anspruch 4, **dadurch gekennzeichnet, dass** jedes der beiden Steuergeräte (22, 24) sich selbst auf Fehler überwacht und bei erkanntem Fehler sich nötigenfalls selbst außer Funktion setzt.

6. Nutzfahrzeug nach Anspruch 4, **dadurch gekennzeichnet, dass** die beiden Steuergeräte (22, 24) sich gegenseitig auf Fehler überwachen und bei erkanntem Fehler im jeweils anderen Steuergerät das nicht vom Fehler betroffenen Steuergerät das vom Fehler betroffene Steuergerät nötigenfalls außer Funktion setzt.

7. Nutzfahrzeug nach Anspruch 5 oder 6, **dadurch gekennzeichnet, dass** im Falle eines Fehlers, der zur Abschaltung eines der Steuergeräte (22, 24) führt, das andere Steuergerät (22, 24) zumindest verhindert, dass dadurch das Fahrzeug in einen sicherheitskritischen Zustand gerät.

8. Nutzfahrzeug nach Anspruch 5, oder 6 **dadurch gekennzeichnet, dass** das noch funktionsfähige Steuergerät (22, 24) die Abschaltung des anderen Steuergerätes (22, 24) erkennt und dessen Funktionen zumindest teilweise übernimmt.

9. Nutzfahrzeug nach einem der Ansprüche 1 bis 3, **dadurch gekennzeichnet, dass** das Modul (26) aus dem mindestens einen Steuergerät (22, 24) und der Pedaleinheit (14) zum einen mit Sensoren (21, 23), Aktoren, Eingabe- und Anzeigegeräten und/oder anderen Steuergeräten in der Kabine (1) des Nutzfahrzeugs und zum andern mit im Bereich außerhalb der Kabine (1) des Nutzfahrzeugs angeordneten Sensoren, Aktoren und/oder anderen Steuergeräten in signal- und/oder leistungsübertragender Verbindung steht.

10. Nutzfahrzeug nach Anspruch 9, **dadurch gekennzeichnet, dass** das Modul (26) aus dem mindestens einen Steuergerät (22, 24) und der Pedaleinheit (14) wenigstens eine weitere Steckerleiste (30) zur Zuführung von Kabeln (31) von Sensoren, Aktoren oder Eingabe- und Anzeigegeräten in der Kabine (1) aufweist.

11. Nutzfahrzeug nach einem der vorhergehenden Ansprüche, **dadurch gekennzeichnet, dass** die von mindestens einem elektronischen Steuergerät (22, 24) gesteuerten elektrischen Einrichtungen eine elektrische Lenkeinrichtung, eine elektronische Motorsteuerung und/oder eine elektrische Bremseinrichtung beinhalten.

12. Nutzfahrzeug nach einem der vorhergehenden Ansprüche, **dadurch gekennzeichnet, dass** die an dem Pedalträger (20) gelagerten Fußpedale ein Gaspedal (16), ein Bremspedal (18) und/oder ein Kupplungspedal umfasst.

## Claims

1. Commercial vehicle comprising several electric devices controlled by at least one electronic control device (22, 24) as well as one pedal unit (14) including pedals (16, 18) supported on a pedal holder (20), wherein said at least one control device (22, 24) is combined with said pedal unit (14) to form a module (26), **characterised in that** said module (26) constituted by said at least one control device (22, 24) and said pedal unit (14) is disposed on a cabin floor (12) of a cabin (1) supported on a frame (2) of the commercial vehicle and comprises at least one edge-board connector (32) for the supply of cables (33) from sensors and/or actuators from the region of said frame (2), with said edge-board connector (32) being disposed on that side of said cabin floor (12) that is turned away from said cabin (1).

2. Commercial vehicle according to Claim 1, **characterised in that** said at least one control device (22, 24) is accommodated in a housing (28) flange-mounted on said pedal holder (20) of said pedal unit (14).

3. Commercial vehicle according to Claim 1, **characterised in that** said at least one control device (22, 24) and components of said pedal unit (14) are accommodated in a common housing.

4. Commercial vehicle according to at least one of the preceding Claims, **characterised in that** at least two control devices (22, 24) redundant, at least in part, with respect to their function are combined with said pedal unit (14) to form said module (26).

5. Commercial vehicle according to Claim 4, **characterised in that** either of said two control device (22, 24) monitors itself for errors and, when errors are detected, renders itself inoperative, if necessary.

6. Commercial vehicle according to Claim 4, **characterised in that** said two control devices (22, 24) monitor each other for errors and, when an error is detected in the respective other control device, render the control device affected by the error inoperative, if necessary.

7. Commercial vehicle according to Claim 5 or 6, **characterised in that** in the event of an error resulting in the deactivation of one of said control devices (22, 24), the other control device (22, 24) at least prevents said vehicle from entering, as a consequence, a condition critical in terms of safety

8. Commercial vehicle according to Claim 5 or 6, **characterised in that** said controller device (22, 24) still functionally operable recognises the deactivation of the other control device (22, 24) and assumes that device's functions at least in part.

9. Commercial vehicle according to any of the Claims 1 to 3, **characterised in that** said module (26) constituted by at least one control device (22, 24) and said pedal unit (14) communicates, on the one hand, with sensors (21, 23), actuators, input and display units and/or other control devices in the cabin (1) of the commercial vehicle and, on the other hand, with sensors, actuators and/or other control devices disposed in the region outside said cabin (1) of the commercial vehicle for signal and/or power transmission.

10. Commercial vehicle according to Claim 9, **characterised in that** said module (26) consisting of said at least one control device (22, 24) and said pedal unit (14) comprises at least one further edge-board connector (30) for the supply of cables (31) from sensors, actuators or input and display units in said cabin (1).

11. Commercial vehicle according to any of the preceding Claims, **characterised in that** said electric devices controlled by at least one electronic control device (22, 24) include an electric steering means, an electronic engine controller and/or an electric braking means.

12. Commercial vehicle according to any of the preceding Claims, **characterised in that** said pedals supported on said pedal holder (20) include a gas pedal (16), a brake pedal (18) and/or a clutch pedal.

## Revendications

1. Véhicule utilitaire comprenant plusieurs dispositifs électriques commandés par au moins un dispositif électronique de commande (22, 24) ainsi qu'une seule unité à pédale (14) renfermant des pédales (16, 18) appuyé sur un patin de pédale (20), dans lequel ledit au moins un dispositif de commande (22, 24) est combiné avec ladite unité à pédale (14) en formant un module (26), **caractérisé en ce que** ledit module (26) constitué par ledit au moins un dispositif de commande (22, 24) et ladite unité à pédale (14) est disposé sur un fond de cabine (12) d'une cabine (1) appuyée sur un cadre (2) du véhicule utilitaire et comprend au moins un connecteur multipoints (32) pour l'apport des câbles (33) venant des détecteurs et/ou acteurs de la région dudit cadre (2), audit connecteur multipoints (32) étant disposé de ce côté dudit fond de cabine (12), qui est opposé à ladite cabine (1).

2. Véhicule utilitaire selon la revendication 1, **caractérisé en ce que** ledit au moins un dispositif de commande (22, 24) est reçu dans un carter (28) bridé audit patin de pédale (20) de ladite unité à pédale (14).

3. Véhicule utilitaire selon la revendication 1, **caractérisé en ce que** ledit au moins un dispositif de commande (22, 24) et des composants de ladite unité à pédale (14) sont reçu dans un carter commun.

4. Véhicule utilitaire selon au moins une des revendications précédentes, **caractérisé en ce qu'**au moins deux dispositifs de commande (22, 24) redondants, au moins en partie, en vue de leur fonction sont combinés avec ladite unité à pédale (14) en formant ledit module (26).

5. Véhicule utilitaire selon la revendication 4, **caractérisé en ce que** chacun desdits deux dispositifs de commande (22, 24) surveille soi-même afin de détecter des erreurs et se rend hors service quand des erreurs sont détectées, si nécessaire.

6. Véhicule utilitaire selon la revendication 4, **caractérisé en ce que** lesdits deux dispositifs de commande (22, 24) surveillent l'un l'autre afin de détecteur des erreurs et rendent le dispositif de commande en erreur hors service quand une erreur et détectée dans l'autre dispositif de commande respectif, si nécessaire.

7. Véhicule utilitaire selon la revendication 5 ou 6, **caractérisé en ce qu'**au cas d'une erreur menant à la désactivation d'un desdits dispositifs de commande (22, 24), l'autre dispositif de commande (22, 24) empêche, au moins, que le véhicule passe en une condition critique en vue de la sécurité, en conséquence.

8. Véhicule utilitaire selon la revendication 5 ou 6, **caractérisé en ce que** ledit dispositif de commande (22, 24) encore efficace reconnaît la désactivation de l'autre dispositif de commande (22, 24) et assume, au moins en partie, les fonctions de ce dispositif.

9. Véhicule utilitaire selon une quelconque des revendications 1 à 3, **caractérisé en ce que** ledit module (26) constitué par au moins un dispositif de commande (22, 24) et ladite unité à pédale (14) se trouve en communication, d'un côté, avec des détecteurs (21, 23), acteurs, unités d'entrée et de visualisation et/ou des autres dispositifs de commande dans la cabine (1) du véhicule utilitaire et, d'autre côté, avec des détecteurs, acteurs et/ou des autres dispositifs de commande disposés dans la zone en dehors de ladite cabine (1) du véhicule utilitaire pour le transfert des signaux et/ou de l'énergie.

10. Véhicule utilitaire selon la revendication 9, **caractérisé en ce que** ledit module (26) constitué par ledit au moins un dispositif de commande (22, 24) et ladite unité à pédale (14) comprend au moins un connecteur multipoints additionnel (30) pour l'apport des câbles (31) venant des détecteurs, acteurs ou unités d'entrée et de visualisation dans ladite cabine (1).

11. Véhicule utilitaire selon une quelconque des revendications précédentes, **caractérisé en ce que** lesdits dispositifs électriques commandés par au moins un dispositif électronique de commande (22, 24) renferment un moyen électrique volant de direction, un moyen de commande électronique du moteur et/ou un moyen électrique de freinage.

12. Véhicule utilitaire selon une quelconque des revendications précédentes, **caractérisé en ce que** lesdites pédales appuyées sur ledit patin de pédale (20) renferment un accélérateur (16), une pédale du frein (18) et/ou une pédale d'embrayage.
